# EUROPÄISCHE PATENTSCHRIFT

(11) **EP 3 797 044 B1**
(45) Veröffentlichungstag und Bekanntmachung des Hinweises auf die Patenterteilung: **08.06.2022**
(21) Anmeldenummer: 19724072.4
(22) Anmeldetag: 18.04.2019
(51) Int. Cl.: F16D 25/08, F16D 25/10, F16D 21/06, B60K 6/48, B60K 6/38, B60K 6/387

(54) **MEHRFACHKUPPLUNGSEINRICHTUNG UND HYBRIDMODUL FÜR EIN KRAFTFAHRZEUG**
MULTI-CLUTCH DEVICE AND HYBRID MODULE FOR A MOTOR VEHICLE
SYSTÈME D'EMBRAYAGE MULTIPLE ET MODULE HYBRIDE POUR VÉHICULE À MOTEUR

(30) Priorität: 22.05.2018 DE 102018112160
(43) Veröffentlichungstag der Anmeldung: 31.03.2021
(73) Patentinhaber: Schaeffler Technologies AG & Co. KG, 91074 Herzogenaurach (DE)
(72) Erfinder: ORTMANN, Simon, 76532 Baden-Baden (DE); OBERLE, Patrick, 68794 Rheinhausen (DE); WAGNER, Philippe, 67460 Souffelweyersheim (FR); BASSLER, Manuel, 77855 Achern (DE)
(86) Internationale Anmeldenummer: PCT/DE2019/100358
(87) Internationale Veröffentlichungsnummer: WO 2019/223829

(56) Entgegenhaltungen:
- DE-A1-102016 125 064
- DE-A1-102016 125 064
- DE-A1-102016 212 846
- DE-A1-102016 219 462
- DE-A1-102016 219 462
- US-A1- 2008 015 085
- US-A1- 2008 015 085

## Beschreibung

Die Erfindung betrifft eine Mehrfachkupplungseinrichtung für ein Hybridmodul, welches für ein Kraftfahrzeug, wie z.B. einen Pkw, einen Lkw oder ein anderes Nutzfahrzeug vorgesehen ist, und welches an eine Verbrennungskraftmaschine anzukoppeln ist. Des Weiteren betrifft die Erfindung das Hybridmodul selbst, das die Mehrfachkupplungseinrichtung aufweist.

Ein Hybridmodul umfasst üblicherweise eine Anschlusseinrichtung zur mechanischen Ankopplung einer Verbrennungskraftmaschine, eine Trennkupplung, mit der Drehmoment von der Verbrennungskraftmaschine auf das Hybridmodul übertragbar ist und mit der das Hybridmodul von der Verbrennungskraftmaschine trennbar ist, eine elektrische Maschine zur Erzeugung eines Antriebsdrehmoments mit einem Rotor, sowie eine Doppelkupplungsvorrichtung, mit der Drehmoment von der elektrischen Maschine und/ oder von der Trennkupplung auf einen Antriebsstrang übertragbar ist. Die Doppelkupplungsvorrichtung umfasst eine erste Teilkupplung und eine zweite Teilkupplung. Jeder angeordneten Kupplung ist jeweils ein Betätigungssystem zugeordnet.

Die elektrische Maschine ermöglicht das elektrische Fahren, Leistungszuwachs zum Verbrennungsmotorbetrieb und Rekuperieren. Die Trennkupplung und deren Betätigungssystem sorgen für das Ankuppeln oder Abkuppeln des Verbrennungsmotors.

Wenn ein Hybridmodul mit einer Doppelkupplung derart in einen Antriebsstrang integriert wird, dass sich das Hybridmodul in Drehmomentübertragungsrichtung zwischen Verbrennungsmotor und Getriebe befindet, müssen im Fahrzeug der Verbrennungsmotor, das Hybridmodul, die Doppelkupplung mit ihren Betätigungssystemen und das Getriebe hinter- oder nebeneinander angeordnet werden. Eine solche Anordnung führt jedoch gelegentlich zu Bauraumproblemen.

Um ein sehr kompaktes Hybridmodul mit integrierter Doppelkupplung zu realisieren, besteht ein vorteilhaftes Bauprinzip darin, die Trennkupplung und die beiden Teilkupplungen der Doppelkupplung radial ineinander anzuordnen.

Die DE 10 2016 212 846 A1 lehrt eine Kupplungsanordnung für einen Antriebsstrang eines Kraftfahrzeuges mit einer Elektromaschine und einer Verbrennungskraftmaschine, deren Drehmoment zu einem Getriebe durch ein Kupplungsaggregat leitbar ist, wobei ein als Kettentrieb ausgebildetes Getriebe zur Übertragung eines Drehmoments von der Elektromaschine zur Kupplungsanordnung eingesetzt ist.

Sämtliche der genannten Hybridmodule bzw. Kupplungseinrichtungen sind aufgrund der axial und/oder radial wirkenden Kräfte einem betriebsbedingten Verschleiß unterworfen und benötigen einen bestimmten Bauraum.

Der vorliegenden Erfindung liegt die Aufgabe zugrunde, eine Mehrfachkupplungseinrichtung sowie ein mit der Mehrfachkupplungseinrichtung ausgestattetes Hybridmodul für ein Kraftfahrzeug zur Verfügung zu stellen, die eine lange Lebensdauer bzw. verschleißarmen Betrieb mit einem axial geringen Bauraumbedarf kombinieren.

Diese Aufgabe wird durch die erfindungsgemäße Mehrfachkupplungseinrichtung nach Anspruch 1 sowie durch das erfindungsgemäße Hybridmodul nach Anspruch 10 gelöst. Vorteilhafte Ausführungsformen der Mehrfachkupplungseinrichtung sind in den Unteransprüchen 2 bis 9 angegeben.

Eine Mehrfachkupplungseinrichtung für ein Hybridmodul eines Kraftfahrzeuges ist in DE102016219462, DE102016125064 und US2008/015085 offenbart.

Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die Begriffe "radial" und "axial" beziehen sich im Rahmen der vorliegenden Erfindung immer auf die Drehachse der Mehrfachkupplungseinrichtung.

Die Erfindung betrifft eine Mehrfachkupplungseinrichtung für ein Hybridmodul zum Ankoppeln einer Verbrennungskraftmaschine. Die Mehrfachkupplungseinrichtung umfasst eine Trennkupplung, mit der Drehmoment von der

Verbrennungskraftmaschine auf die Mehrfachkupplungseinrichtung übertragbar ist und mit der die Mehrfachkupplungseinrichtung von der Verbrennungskraftmaschine trennbar ist; sowie eine Doppelkupplungsvorrichtung, mit der Drehmoment von einer elektrischen Maschine und/ oder von der Trennkupplung auf einen Antriebsstrang übertragbar ist, mit einer ersten Teilkupplung und einer zweiten Teilkupplung, wobei die Kupplungen über ein gemeinsames Rotationsteil drehfest miteinander gekoppelt sind. Weiterhin umfasst die Mehrfachkupplungseinrichtung ein Getriebeelement zur Ausbildung eines Getriebes zwischen der elektrischen Maschine und der Mehrfachkupplungseinrichtung zwecks Übertragung einer Drehbewegung zwischen der elektrischen Maschine und der Mehrfachkupplungseinrichtung. Das gemeinsame Rotationsteil ist mittels eines ersten Drehlagers und das Getriebeelement ist mittels eines zweiten Drehlagers in axialer und/ oder radialer Richtung drehgelagert. Die Mehrfachkupplungseinrichtung weist weiterhin eine Spanneinrichtung auf, mit der das gemeinsame Rotationsteil sowie das Getriebeelement und demzufolge auch das erste Drehlager und das zweite Drehlager in axialer Richtung gegeneinander verspannbar sind.

Es ist dabei insbesondere vorgesehen, dass die Kupplungen sowie das Getriebeelement um eine gemeinsame Rotationsachse koaxial angeordnet sind. Dabei können die Trennkupplung sowie die beiden Teilkupplungen einander radial überlagernd angeordnet sein.

Weiterhin ist insbesondere vorgesehen, dass die Trennkupplung in Bezug zu den beiden Teilkupplungen radial innen angeordnet ist. Das gemeinsame Rotationsteil bildet dabei die Ausgangsseite der Trennkupplung und die Eingangsseiten der ersten Teilkupplung sowie der zweiten Teilkupplung aus. In günstiger Ausgestaltung ist vorgesehen, dass das gemeinsame Rotationsteil jeweils die Außenlamellenträger aller drei Kupplungen ausbildet.

Die Innenlamellenträger der drei Kupplungen sind jeweils mit einer Welle verbunden, wobei der Innenlamellenträger der Trennkupplung mit einer Eingangswelle drehfest verbunden ist, und die beiden Innenlamellenträger der beiden Teilkupplungen mit jeweils einer Ausgangswelle drehfest verbunden sind, die mit Getriebeeingangswellen eines Doppelkupplungsgetriebes verbunden werden können oder diese ausbilden. Vorteilhafterweise sind zumindest die Innenlamellenträger der beiden Teilkupplungen über Verzahnungen mit den jeweiligen Wellen gekoppelt.

Vorzugsweise erfolgt die axiale Belastung durch Einleitung einer jeweiligen Druckkraft auf das gemeinsame Rotationsteil und auf das Getriebeelement, in entgegengesetzten Richtungen ausgerichtet.

Entsprechend sind das gemeinsame Rotationsteil und das Getriebeelement in ihren Axial-Positionen relativ zueinander fixiert, sodass die gesamte

Mehrfachkupplungseinrichtung und ein damit ausgestaltetes Hybridmodul in seinen einzelnen Bauteilen in axialer Richtung stabilisiert ist.

Bevorzugt ist vorgesehen, dass sich die Spanneinrichtung axial einerseits an dem Getriebeelement abstützt und axial andererseits an dem gemeinsamen Rotationsteil bzw. an einem damit axial fest verbundenen Bauteil abstützt.

Dabei kann die Mehrfachkupplungseinrichtung einen Kupplungsdeckel aufweisen, der axial fest mit dem gemeinsamen Rotationsteil verbunden ist oder von diesem ausgebildet ist, wobei in axialer Richtung eine als Druckfeder oder Druckfederpaket ausgestaltete Spanneinrichtung sich einerseits an dem Kupplungsdeckel abstützt und andererseits an dem Getriebeelement abstützt. Entsprechend ist vorgesehen, dass die beiden Bauteile - das gemeinsame Rotationsteil und das Getriebeelement - axial auseinandergedrückt werden, sodass entsprechend auch die ihnen zugeordneten Drehlager axial vorgespannt werden. Zur Betätigung der beiden Teilkupplungen vorgesehene Drucktöpfe können das Getriebeelement durchgreifen, wozu entsprechende Aussparungen im Getriebeelement vorgesehen sind. Aufgrund dessen, dass diese Bauteile mit derselben Drehzahl drehen, sind keine Interferenzen zu befürchten.

In einer weiteren erfindungsgemäßen Ausgestaltung der Mehrfachkupplungseinrichtung ist vorgesehen, dass die beiden Teilkupplungen Druckfedereinrichtungen aufweisen, die sich axial am Kupplungsdeckel abstützen, um im nicht-betätigten Zustand eine selbsttätige Öffnung der jeweiligen Teilkupplung zu erreichen. Insbesondere ist vorgesehen, dass sich das erste Drehlager radial und/ oder axial an einem Gehäuse der Mehrfachkupplungseinrichtung abstützt, und/ oder dass sich das zweite Drehlager radial und/ oder axial an einer Führungshülse abstützt. Dabei kann vorgesehen sein, dass diese Abstützung des zweiten Drehlagers an der Führungshülse indirekt erfolgt, nämlich indem sich das zweite Drehlager radial und/ oder axial an einer Lagerhülse abstützt, die sich wiederum radial und/ oder axial an der Führungshülse abstützt. Der Vorteil dieser Ausgestaltungsform liegt darin, dass die Führungshülse dabei gleichzeitig eine Lauffläche für eine Dichtung des Kolbens des Betätigungssystems der ersten Teilkupplung gegenüber der Umgebung ausbilden kann.

Das Gehäuse kann auch als Trägerbauteil bezeichnet werden und begrenzt die Mehrfachkupplungseinrichtung bzw. ein damit ausgestattetes Hybridmodul axial gegenüber einem Bauraum, in dem ein Schwingungsdämpfer, wie z.B. ein Zweimassenschwungrad, an das Hybridmodul anschließbar oder angeschlossen ist.

Die Führungshülse kann dabei axial einen Anschlag aufweisen, an den die Lagerhülse durch die Spanneinrichtung kraftbeaufschlagt axial andrückt. Dabei soll jedoch die Erfindung nicht auf einen derartigen Anschlag bzw. Absatz eingegrenzt werden, sondern es kann auch eine mechanische Verbindung zwischen der Lagerhülse und der Führungshülse durch ein Gewinde oder Sicherungsringe oder ähnliche Bauteile realisiert sein. Zusätzlich zur axialen Anlage kann auch vorgesehen sein, dass die Lagerhülse auf die Führungshülse aufgepresst ist und demzufolge kraftschlüssig axial eine Kraft zwischen Lagerhülse und Führungshülse übertragen werden kann.

Vorzugsweise ist das Getriebeelement ein Zahnrad, welches eine Innenverzahnung aufweist, wobei das gemeinsame Rotationsteil eine Außenverzahnung hat, und die Innenverzahnung des Zahnrades mit der Außenverzahnung des gemeinsamen Rotationsteils kämmt.

Weiterhin umfasst das Zahnrad auch eine Getriebe-Außenverzahnung, mit welchem ein weiteres Zahnrad zur Ausbildung eines Getriebes zwischen der elektrischen Maschine und der Mehrfachkupplungseinrichtung zwecks Übertragung einer Drehbewegung zwischen der elektrischen Maschine und der Mehrfachkupplungseinrichtung in Eingriff bringbar ist.

Bei einer Ausgestaltung der Verzahnung zwischen dem Zahnrad der Mehrfachkupplungseinrichtung und einem weiteren Zahnrad zur Ausbildung des Getriebes zwischen Mehrfachkupplungseinrichtung und angeschlossener elektrischer Maschine als Schrägverzahnung nimmt insbesondere das zweite Drehlager durch die Schrägverzahnung eingetragene axiale Kräfte auf, sodass diese axialen Kräfte nicht von den Kupplungen zu ertragen sind.

Wenigstens einer der beiden Teilkupplungen ist ein Betätigungssystem zugeordnet, welches konzentrisch um eine gemeinsame Rotationsachse ausgebildet ist und auch als CSC (Concentric Slave Cylinder) bezeichnet wird.

Vorzugsweise ist der ersten Teilkupplung ein erstes Betätigungssystem zugeordnet und der zweiten Teilkupplung ist ein zweites Betätigungssystem zugeordnet, wobei sich die beiden Betätigungssysteme einander radial zumindest abschnittsweise überlagern.

Wenigstens ein Betätigungssystem einer Teilkupplung kann axial gegenüber der Führungshülse, die einen sich radial erstreckenden Abschnitt aufweist, mittels eines O-Rings abdichtet sein.

Die Dichtung liegt entsprechend axial zwischen einem Gehäusebauteil des Betätigungssystems und dem radialen Abschnitt der Führungshülse, und dichtet derart den Druckraum der jeweiligen Teilkupplung gegenüber der Umgebung ab. Eine Zentrierung des Gehäusebauteils kann dabei über ein Formelement an der Führungshülse bzw. deren radialen Abschnitt erfolgen, oder alternativ über einen Bund oder auch Durchstellungen. Zur Sicherung der Position des Gehäusebauteils sowie zur Gewährleistung der Dichtheit können Schraubverbindungen zwischen Gehäusebauteil und Führungshülse genutzt werden, um beide Bauteile aneinander zu spannen und gegebenenfalls von außen, insbesondere durch das Getriebeelement eingetragene, Belastungen aufzunehmen.

Des Weiteren wird erfindungsgemäß ein Hybridmodul zur Verfügung gestellt, umfassend eine erfindungsgemäße Mehrfachkupplungseinrichtung sowie eine elektrische Maschine zur Erzeugung eines Antriebsdrehmoments mit einem Rotor, wobei der Rotor in Bezug zur Rotationsachse der Mehrfachkupplungseinrichtung achsparallel angeordnet ist und mittels eines Getriebes, welches das Getriebeelement der Mehrfachkupplungseinrichtung umfasst, mit der Mehrfachkupplungseinrichtung verbunden ist.

Entsprechend kann das Hybridmodul durch eine an eine Eingangswelle des Hybridmoduls bzw. der Mehrfachkupplungseinrichtung angeschlossene Verbrennungskraftmaschine und/oder durch eine an das Getriebeelement über ein Getriebe gekoppelte, axial versetzt angeordnete elektrische Maschine betrieben werden. Das Hybridmodul umfasst zur Ausbildung des Getriebes ein weiteres Zahnrad zwischen der elektrischen Maschine und der Mehrfachkupplungseinrichtung bzw. dessen Getriebeelements, zwecks Übertragung einer Drehbewegung bzw. eines Drehmoments zwischen der elektrischen Maschine und der Mehrfachkupplungseinrichtung.

In einer günstigen Ausgestaltung der Mehrfachkupplungseinrichtung bzw. des Hybridmoduls umfasst diese bzw. dieses ein Toleranzausgleichs-Element zum Ausgleich von axial bestehenden Toleranzketten axial aneinander gekoppelter Bauteile. Dieses Element kann eine sogenannte Shimscheibe sein oder ein mehrere Shimscheiben umfassendes Paket. In Abhängigkeit von der auszugleichenden Toleranz kann die axiale Ausdehnung bzw. Dicke dieser Shimscheibe bzw. eines daraus gebildeten Shimscheiben- Pakets eingestellt sein. Entsprechend lassen sich axiale Vorspannungen an der axial miteinander verbundenen Bauteile reduzieren oder auf ein gewünschtes Maß einstellen.

Die Montage des Hybridmoduls kann derart erfolgen, dass die Betätigungssysteme der Teilkupplungen und das Getriebeelement im an den restlichen Bestandteil der Mehrfachkupplungseinrichtung montierten Zustand beim Kunden angeliefert werden, sodass dort im Wesentlichen das komplette Hybridmodul als ein Aggregat in einen Antriebsstrang eines Kraftfahrzeuges montiert werden kann.

Alternativ ist vorgesehen, dass die Betätigungssysteme der Teilkupplungen und das Getriebeelement als Einzelbauteile neben den restlichen Bauteilen der Mehrfachkupplungseinrichtung beim Kunden angeliefert werden und dort nacheinander montiert werden, wobei sich anbietet, erst beim Kunden die Führungshülse an der Lagerhülse zu befestigen; oder das zweite Drehlager auf der Lagerhülse anzuordnen.

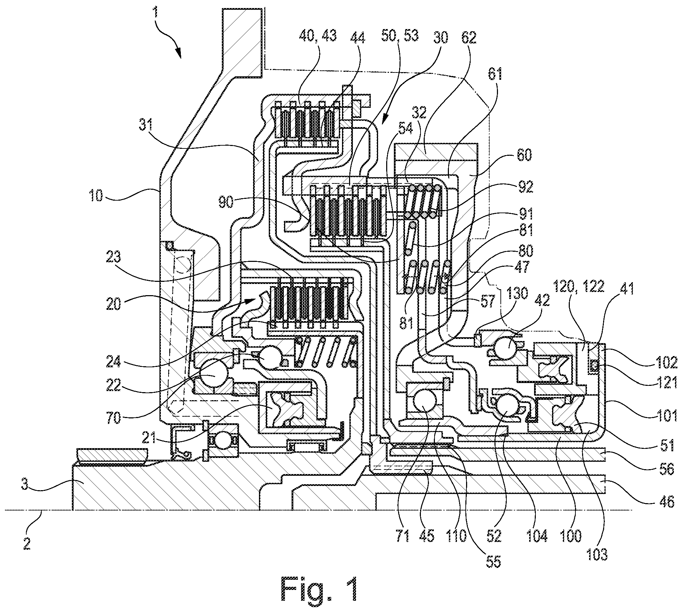

Die oben beschriebene Erfindung wird nachfolgend vor dem betreffenden technischen Hintergrund unter Bezugnahme auf die zugehörige Zeichnung, welche eine bevorzugte Ausgestaltung zeigt, detailliert erläutert. Die Erfindung wird durch die rein schematische Zeichnung in keiner Weise beschränkt, wobei anzumerken ist, dass das in der Zeichnung gezeigte Ausführungsbeispiel nicht auf die dargestellten Maße eingeschränkt ist. Es ist dargestellt in
Fig. 1: eine erfindungsgemäße Mehrfachkupplungseinrichtung in einem Teilschnitt.

Die einzige Figur 1 zeigt eine Mehrfachkupplungseinrichtung 1 in einer erfindungsgemäßen Ausführungsform.

Auf einer gemeinsamen Rotationsachse 2 ist innerhalb eines Gehäuses 10 an einer Eingangswelle 3 angeschlossen eine Trennkupplung 20 vorgesehen. Der Innenlamellenträger 24 der Trennkupplung 20 ist dabei mit der Eingangswelle 3 drehfest verbunden. Der Außenlamellenträger 23 der Trennkupplung 20 ist ein Bestandteil eines gemeinsamen Rotationsteils 31, welches gleichzeitig den Außenlamellenträger 43 einer ersten Teilkupplung 40 sowie den Außenlamellenträger 53 einer zweiten Teilkupplung 50 ausbildet. Zusammen bilden die erste Teilkupplung 40 und die zweite Teilkupplung 50 eine Doppelkupplungsvorrichtung 30 aus, deren zentrales Bauteil das gemeinsame Rotationsteil 31 ist.

Die Trennkupplung 20 wird über ein Trennkupplungs-Betätigungssystem 21 betätigt, mit welchem eine axial wirkende Kraft auf ein Trennkupplungs-Betätigungslager 22 aufbringbar ist, welches sich axial an dem Lamellenpaket der Trennkupplung 20 abstützt.

Ebenso ist der ersten Teilkupplung 40 ein erstes Betätigungssystem 41 zugeordnet, welches axial auf ein erstes Betätigungslager 42 wirkt. Entsprechend ist auch der zweiten Teilkupplung 50 ein zweites Betätigungssystem 51 zugeordnet, welches axial auf ein zweites Betätigungslager 52 wirkt.. Die Betätigungslager 42, 52 wirken dabei axial auf einen ersten Drucktopf 47 der ersten Teilkupplung 40 bzw. einen zweiten Drucktopf 57 der zweiten Teilkupplung 50, die wiederum Axialkräfte auf das Lamellenpaket der ersten Teilkupplung 40 bzw. das Lamellenpaket der zweiten Teilkupplung 50 leiten, um die Lamellen zusammenzupressen und derart Drehmoment zu übertragen.

Der Innenlamellenträger 44 der ersten Teilkupplung 40 ist über eine erste Verzahnung 45 mit einer ersten Ausgangswelle 46, die auch eine erste Getriebeeingangswelle eines Doppelkupplungsgetriebes sein kann, verbunden. Der Innenlamellenträger 54 der zweiten Teilkupplung 50 ist über eine zweite Verzahnung 55 mit einer zweiten Ausgangswelle 56, die entsprechend auch eine zweite Getriebeeingangswelle eines Doppelkupplungsgetriebes sein kann, verbunden.

Es ist erfindungsgemäß vorgesehen, dass das die Kupplungen 20,40,50 verbindende gemeinsame Rotationsteil 31 eine Außenverzahnung 32 aufweist, die mit der Innenverzahnung eines Getriebeelements 60 der Mehrfachkupplungseinrichtung 1 kämmt. Entsprechend kann ein Drehmoment von einer hier nicht dargestellten, mit dem Getriebeelement 60 gekoppelten elektrischen Maschine über das Getriebeelement 60 und die Außenverzahnung 32 des gemeinsamen Rotationsteils 31 auf dieses und demzufolge auf die Kupplungen 20,40,50 übertragen werden. Zu diesem Zweck weist das Getriebeelement 60 eine Getriebe-Außenverzahnung 62 auf, die mit einem hier nicht extra dargestellten weiteren Zahnrad auf der Drehachse einer angeschlossenen elektrischen Maschine kämmen kann.

Das gemeinsame Rotationsteil 31 ist drehbar mittels eines ersten Drehlagers 70 auf bzw. im Gehäuse 2 gelagert. Das Getriebeelement 60 ist mittels eines zweiten Drehlagers 71 drehbar gelagert, wobei in der hier dargestellten Ausführungsform dieses zweite Drehlager 71 sich auf einer Lagerhülse 110 radial abstützt, die wiederum radial und auch axial durch eine Führungshülse 100 positioniert und gehalten ist. Zu diesem Zweck weist die Führungshülse 100 einen Anschlag 104 auf, an dem axial die Lagerhülse 110 anliegt. Eine diesen Anschlag 104 ausbildende Seite der Führungshülse 100 bildet dabei gleichzeitig eine Lauffläche 103 zur Anordnung des zweiten Betätigungssystems 51 für die zweite Teilkupplung bzw. für ein darauf verschiebliches, dichtend gelagertes Kolbenelement des zweiten Betätigungssystems 51.

Es ist erfindungsgemäß vorgesehen, dass als ein Bestandteil des gemeinsamen Rotationsteils 31 oder auch fest an diesem angeordnet ein Kupplungsdeckel 90 vorgesehen ist, der sich im Wesentlichen radial erstreckt. Axial zwischen dem Getriebeelement 60 und dem Kupplungsdeckel 90 ist eine Spanneinrichtung 80 angeordnet, die in entgegengesetzten Richtungen jeweils eine axiale Kraft 81 auf das Getriebeelement 60 sowie auf den Kupplungsdeckel 90 ausübt, sodass entsprechend das Getriebeelement 60 sowie das gemeinsame Rotationsteil 31 axial gegeneinander verspannt werden. Aufgrund der Lagerung des Getriebeelements 60 durch das zweite Drehlager 71 und der Lagerung des gemeinsamen Rotationsteils 31 durch das erste Drehlager 70 werden auch diese beiden Drehlager 70,71 axial gegeneinander verspannt. Entsprechend wird den beiden Drehlagern 70,71 jegliches axiales Spiel genommen und die daran angeordneten Bauteils - gemeinsames Rotationsteil 31 und Getriebeelement 60 - ebenfalls in axialer Richtung spielfrei positioniert, sodass ein betriebsbedingtes Spiel unterbunden ist und entsprechend der Verschleiß der angeschlossenen Kupplungen 20, 40,50 vermindert ist.

Des Weiteren ist der ersten Teilkupplung 40 eine erste Druckfedereinrichtung 91 zugeordnet, die sich axial am ersten Drucktopf 47 sowie am Kupplungsdeckel 90 abstützt, und der zweiten Teilkupplung 50 ist eine zweite Druckfedereinrichtung 92 zugeordnet, die sich axial am zweiten Drucktopf 57 und dem Kupplungsdeckel 90 abstützt.

Die Funktion der jeweiligen Druckfedereinrichtung 91,92 ist die selbsttätige Öffnung der jeweiligen Teilkupplung 40,50, wenn diese nicht durch das erste Betätigungssystem 41 bzw. das zweite Betätigungssystem 51 geschlossen wird.

Weiterhin ist in der hier dargestellten Ausführungsform der Mehrfachkupplungseinrichtung 1 vorgesehen, dass die Führungshülse 100 mit einem sich radial erstreckenden Abschnitt 101 ausgestaltet ist, an welchem ein Formelement 102 angeordnet bzw. ausgebildet ist, welches zur Positionierung eines Gehäusebauteils 120 des ersten Betätigungssystems 41 der ersten Teilkupplung 40 dient. Zwischen einer durch das Gehäusebauteil 120 radial verlaufenden Hydraulikleitung 122 und dem sich radial erstreckenden Abschnitt 101 der Führungshülse 100 ist in der hier dargestellten Ausführungsform als Dichtung ein O-Ring 121 vorgesehen, um das Gehäusebauteil 120 gegenüber der Führungshülse 100 bzw. dem sich radial erstreckenden Abschnitt 101 und entsprechend dem dadurch radial begrenzten Kupplungsraum abzudichten.

Des Weiteren umfasst die dargestellte Mehrfachkupplungseinrichtung 1 ein Toleranzausgleichs-Element 130, insbesondere eine sogenannte Shim-Scheibe, zum Ausgleich von axialen Toleranzketten aneinander mechanisch angeschlossener Bauteile.

Mit der hier vorgeschlagenen Mehrfachkupplungseinrichtung wird eine Einrichtung zur Verfügung gestellt, die einen geringen Verschleiß mit einem geringen axialen Bauraumbedarf kombiniert.

### Bezugszeichenliste

- 1: Mehrfachkupplungseinrichtung
- 2: gemeinsame Rotationsachse
- 3: Eingangswelle
- 10: Gehäuse
- 20: Trennkupplung
- 21: Trennkupplungs-Betätigungssystem
- 22: Trennkupplungs-Betätigungslager
- 23: Außenlamellenträger der Trennkupplung
- 24: Innenlamellenträger der Trennkupplung
- 30: Doppelkupplungsvorrichtung
- 31: gemeinsames Rotationsteil
- 32: Außenverzahnung
- 40: Erste Teilkupplung
- 41: Erstes Betätigungssystem
- 42: Erstes Betätigungslager
- 43: Außenlamellenträger der ersten Teilkupplung
- 44: Innenlamellenträger der ersten Teilkupplung
- 45: Erste Verzahnung
- 46: Erste Ausgangswelle
- 47: Erster Drucktopf
- 50: zweite Teilkupplung
- 51: zweites Betätigungssystem
- 52: zweites Betätigungslager
- 53: Außenlamellenträger der zweiten Teilkupplung
- 54: Innenlamellenträger der zweiten Teilkupplung
- 55: Zweite Verzahnung
- 56: Zweite Ausgangswelle
- 57: Zweiter Drucktopf
- 60: Getriebeelement
- 61: Innenverzahnung
- 62: Getriebe-Außenverzahnung
- 70: erstes Drehlager
- 71: zweites Drehlager
- 80: Spanneinrichtung
- 81: Axiale Kraft
- 90: Kupplungsdeckel
- 91: Erste Druckfedereinrichtung
- 92: Zweite Druckfedereinrichtung
- 100: Führungshülse
- 101: sich radial erstreckender Abschnitt
- 102: Formelement
- 103: Lauffläche
- 104: Anschlag
- 110: Lagerhülse
- 120: Gehäusebauteil
- 121: O-Ring
- 122: Hydraulikleitung
- 130: Toleranzausgleichs-Element

## Patentansprüche

1. Mehrfachkupplungseinrichtung (1) für ein Hybridmodul zum Ankoppeln einer Verbrennungskraftmaschine, umfassend eine Trennkupplung (20), mit der Drehmoment von der Verbrennungskraftmaschine auf die Mehrfachkupplungseinrichtung (1) übertragbar ist und mit der die Mehrfachkupplungseinrichtung (1) von der Verbrennungskraftmaschine trennbar ist; eine Doppelkupplungsvorrichtung (30), mit der Drehmoment von einer elektrischen Maschine und/ oder von der Trennkupplung (20) auf einen Antriebsstrang übertragbar ist, mit einer ersten Teilkupplung (40) und einer zweiten Teilkupplung (50), wobei die Kupplungen (20,40,50) über ein gemeinsames Rotationsteil (31) drehfest miteinander gekoppelt sind; sowie ein Getriebeelement (60) zur Ausbildung eines Getriebes zwischen der elektrischen Maschine und der Mehrfachkupplungseinrichtung (1) zwecks Übertragung einer Drehbewegung zwischen der elektrischen Maschine und der Mehrfachkupplungseinrichtung (1), **dadurch gekennzeichnet, dass** das gemeinsame Rotationsteil (31) mittels eines ersten Drehlagers (70) und das Getriebeelement (60) mittels eines zweiten Drehlagers (71) in axialer und/ oder radialer Richtung drehgelagert sind, wobei die Mehrfachkupplungseinrichtung (1) weiterhin eine Spanneinrichtung (80) aufweist, mit der das gemeinsame Rotationsteil (31) sowie das Getriebeelement (60) und demzufolge auch das erste Drehlager (70) und das zweite Drehlager (71) in axialer Richtung gegeneinander verspannbar sind.

2. Mehrfachkupplungseinrichtung nach Anspruch 1, **dadurch gekennzeichnet, dass** sich die Spanneinrichtung (80) axial einerseits an dem Getriebeelement (60) abstützt und axial andererseits an dem gemeinsamen Rotationsteil (31) bzw. an einem damit axial fest verbundenen Bauteil abstützt.

3. Mehrfachkupplungseinrichtung nach Anspruch 2, **dadurch gekennzeichnet, dass** die Mehrfachkupplungseinrichtung (1) einen Kupplungsdeckel (90) aufweist, der axial fest mit dem gemeinsamen Rotationsteil (31) verbunden ist oder von diesem ausgebildet ist, wobei in axialer Richtung eine als Druckfeder oder Druckfederpaket ausgestaltete Spanneinrichtung (80) sich einerseits an dem Kupplungsdeckel (90) abstützt und andererseits an dem Getriebeelement (60) abstützt.

4. Mehrfachkupplungseinrichtung nach Anspruch 3, **dadurch gekennzeichnet, dass** die beiden Teilkupplungen (40,50) Druckfedereinrichtungen (91,92) aufweisen, die sich axial am Kupplungsdeckel (90) abstützen, um im nicht-betätigten Zustand eine selbsttätige Öffnung der jeweiligen Teilkupplung zu erreichen.

5. Mehrfachkupplungseinrichtung nach einem der vorhergehenden Ansprüche, **dadurch gekennzeichnet, dass** sich das erste Drehlager (70) radial und/ oder axial an einem Gehäuse (10) der Mehrfachkupplungseinrichtung (1) abstützt; und/ oder dass sich das zweite Drehlager (71) radial und/ oder axial an einer Führungshülse (100) abstützt.

6. Mehrfachkupplungseinrichtung nach Anspruch 5, **dadurch gekennzeichnet, dass** die Führungshülse (100) axial einen Anschlag (104) aufweist, an den eine Lagerhülse (110) durch die Spanneinrichtung (80) kraftbeaufschlagt axial andrückt.

7. Mehrfachkupplungseinrichtung nach einem der vorhergehenden Ansprüche, **dadurch gekennzeichnet, dass** das Getriebeelement (60) ein Zahnrad ist, welches eine Innenverzahnung (61) aufweist, wobei das gemeinsame Rotationsteil (31) eine Außenverzahnung (32) hat, und die Innenverzahnung (61) des Zahnrades mit der Außenverzahnung (32) des gemeinsamen Rotationsteils (31) kämmt.

8. Mehrfachkupplungseinrichtung nach Anspruch 7, **dadurch gekennzeichnet, dass** das Zahnrad des Weiteren auch eine Getriebe-Außenverzahnung (62) aufweist, mit welchem ein weiteres Zahnrad zur Ausbildung eines Getriebes zwischen der elektrischen Maschine und der Mehrfachkupplungseinrichtung (1) zwecks Übertragung einer Drehbewegung zwischen der elektrischen Maschine und der Mehrfachkupplungseinrichtung (1) in Eingriff bringbar ist.

9. Mehrfachkupplungseinrichtung nach einem der Ansprüche 5-8, **dadurch gekennzeichnet, dass** wenigstens ein Betätigungssystem (41,51) einer Teilkupplung (40,50) axial gegenüber der Führungshülse (100), die einen sich radial erstreckenden Abschnitt (101) aufweist, abgedichtet ist, insbesondere mittels eines O-Rings (121).

10. Hybridmodul, umfassend eine Mehrfachkupplungseinrichtung (1) nach einem der Ansprüche 1 bis 9 sowie eine elektrische Maschine zur Erzeugung eines Antriebsdrehmoments mit einem Rotor, wobei der Rotor in Bezug zur Rotationsachse (2) der Mehrfachkupplungseinrichtung (1) achsparallel angeordnet ist und mittels eines Getriebes, welches das Getriebeelement (60) der Mehrfachkupplungseinrichtung (1) umfasst, mit der Mehrfachkupplungseinrichtung (1) verbunden ist.

## Claims

1. A multi-clutch device (1) for a hybrid module for coupling an internal combustion engine, comprising a disconnect clutch (20), by means of which torque can be transmitted from the internal combustion engine to the multi-clutch device (1) and by means of which the multi-clutch device (1) can be disconnected from the internal combustion engine; a dual-clutch device (30), by means of which torque can be transmitted from an electric machine and/or from the disconnect clutch (20) to a drive train, having a first partial clutch (40) and a second partial clutch (50), wherein the clutches (20, 40, 50) are coupled to one another in a non-rotatable manner via a common rotating part (31) as well as a transmission element (60) for forming a transmission between the electric machine and the multi-clutch device (1) for the purpose of transmitting a rotational movement between the electric machine and the multi-clutch device (1), **characterised in that** the common rotating part (31) is rotatably mounted in the axial and/or radial direction by means of a first rotary bearing (70) and the transmission element (60) is rotatably mounted in the axial and/or radial direction by means of a second rotary bearing (71), wherein the multi-clutch device (1) further comprises a clamping device (80) by means of which the common rotating part (31) as well as the transmission element (60) and consequently also the first rotary bearing (70) and the second rotary bearing (71) can be clamped against one another in the axial direction.

2. The multi-clutch device according to claim 1, **characterised in that** the clamping device (80) is axially supported on the one hand on the transmission element (60) and is axially supported on the other hand on the common rotating part (31) or on a component which is connected thereto in an axially fixed manner.

3. The multi-clutch device according to claim 2, **characterised in that** the multi-clutch device (1) has a clutch cover (90) which is connected to the common rotating part (31) in an axially fixed manner or is formed by the latter, wherein in the axial direction a clamping device (80) configured as a compression spring or compression spring assembly is supported on the one hand on the clutch cover (90) and on the other hand on the transmission element (60).

4. The multi-clutch device according to claim 3, **characterised in that** the two partial clutches (40, 50) have compression spring devices (91, 92) which are axially supported on the clutch cover (90) in order to achieve an automatic opening of the respective partial clutch in the non-actuated state.

5. The multi-clutch device according to any one of the preceding claims, **characterised in that** the first rotary bearing (70) is supported radially and/or axially on a housing (10) of the multi-clutch device (1); and/or **in that** the second rotary bearing (71) is supported radially and/or axially on a guide sleeve (100).

6. The multi-clutch device according to claim 5, **characterised in that** the guide sleeve (100) has an axial stop (104) against which a bearing sleeve (110) presses axially under a force exerted by the clamping device (80).

7. The multi-clutch device according to any one of the preceding claims, **characterised in that** the transmission element (60) is a gear having an internal toothing system (61), wherein the common rotating part (31) has an external toothing system (32), and the internal toothing system (61) of the gear meshes with the external toothing system (32) of the common rotating part (31).

8. The multi-clutch device according to claim 7, **characterised in that** the gear further comprises a transmission external toothing system (62) with which another gear can be engaged to form a transmission between the electric machine and the multi-clutch device (1) for the purpose of transmitting a rotational movement between the electric machine and the multi-clutch device (1).

9. The multi-clutch device according to any one of claims 5 to 8, **characterised in that** at least one actuation system (41, 51) of a partial clutch (40, 50) is axially sealed, in particular by means of an O-ring (121), with respect to the guide sleeve (100), which has a radially extending portion (101).

10. A hybrid module, comprising a multi-clutch device (1) according to any one of claims 1 to 9 and an electric machine for generating a drive torque with a rotor, wherein the rotor is arranged axis-parallel with respect to the axis of rotation (2) of the multi-clutch device (1) and is connected to the multi-clutch device (1) by means of a transmission comprising the transmission element (60) of the multi-clutch device (1).

## Revendications

1. Système d'embrayage multiple (1) pour un module hybride destiné à l'embrayage d'un moteur à combustion interne, comprenant un embrayage de séparation (20), avec lequel un couple peut être transmis du moteur à combustion interne au système d'embrayage multiple (1) et avec lequel le système d'embrayage multiple (1) peut être séparé du moteur à combustion interne ; un système d'embrayage double (30), avec lequel un couple peut être transmis d'une machine électrique et/ou de l'embrayage de séparation (20) à une chaîne cinématique, avec un premier embrayage partiel (40) et un second embrayage partiel (50), les embrayages (20, 40, 50) étant couplés l'un à l'autre de manière solidaire en rotation par l'intermédiaire d'un élément de rotation commun (31); ainsi qu'un élément de transmission (60) pour former une transmission entre la machine électrique et le système d'embrayage multiple (1) en vue de la transmission d'un mouvement de rotation entre la machine électrique et le système d'embrayage multiple (1), **caractérisé en ce que** l'élément de rotation commun (31) est monté en rotation dans la direction axiale et/ou radiale au moyen d'un premier palier rotatif (70) et l'élément de transmission (60) au moyen d'un second palier rotatif (71), le système d'embrayage multiple (1) présentant en outre un dispositif de serrage (80) avec lequel l'élément de rotation commun (31) ainsi que l'élément de transmission (60) et, par conséquent, le premier palier rotatif (70) et le second palier rotatif (71) pouvant aussi être serrés l'un contre l'autre dans la direction axiale.

2. Système d'embrayage multiple selon la revendication 1, **caractérisé en ce que** le dispositif de serrage (80) s'appuie axialement d'une part sur l'élément de transmission (60) et s'appuie axialement d'autre part sur l'élément de rotation commun (31) ou sur un composant auquel il est relié axialement de manière solidaire.

3. Système d'embrayage multiple selon la revendication 2, **caractérisé en ce que** le système d'embrayage multiple (1) présente un couvercle d'embrayage (90) qui est relié axialement de manière fixe à l'élément de rotation commun (31) ou qui est formé par celle-ci, un dispositif de serrage (80) conçu comme un ressort de pression ou un paquet de ressorts de pression s'appuyant dans la direction axiale d'une part sur le couvercle d'embrayage (90) et d'autre part sur l'élément de transmission (60).

4. Système d'embrayage multiple selon la revendication 3, **caractérisé en ce que** les deux embrayages partiels (40, 50) présentent des dispositifs à ressort de pression (91, 92) qui s'appuient axialement sur le couvercle d'embrayage (90) afin d'obtenir une ouverture automatique de l'embrayage partiel respectif lorsqu'il n'est pas actionné.

5. Système d'embrayage multiple selon l'une quelconque des revendications précédentes, **caractérisé en ce que** le premier palier rotatif (70) s'appuie radialement et/ou axialement sur un boîtier (10) du système d'embrayage multiple (1) ; et/ou **en ce que** le second palier rotatif (71) s'appuie radialement et/ou axialement sur une douille de guidage (100).

6. Système d'embrayage multiple selon la revendication 5, **caractérisé en ce que** la douille de guidage (100) présente axialement une butée (104) contre laquelle une douille de palier (110) est pressée axialement par la force du dispositif de serrage (80).

7. Système d'embrayage multiple selon l'une quelconque des revendications précédentes, **caractérisé en ce que** l'élément de transmission (60) est une roue dentée qui présente une denture intérieure (61), l'élément de rotation commun (31) présentant une denture extérieure (32), et la denture intérieure (61) de la roue dentée s'engrène avec la denture extérieure (32) de l'élément de rotation commun (31).

8. Système d'embrayage multiple selon la revendication 7, **caractérisé en ce que** la roue dentée comprend en outre également une denture extérieure d'engrenage (62) avec laquelle une autre roue dentée peut être mise en prise pour former un engrenage entre la machine électrique et le système d'embrayage multiple (1) afin de transmettre un mouvement de rotation entre la machine électrique et le système d'embrayage multiple (1).

9. Système d'embrayage multiple selon l'une quelconque des revendications 5 à 8, **caractérisé en ce qu'**au moins un système d'actionnement (41, 51) d'un embrayage partiel (40, 50) est étanchéifié axialement par rapport à la douille de guidage (100) qui présente une section (101) s'étendant radialement, notamment au moyen d'un joint torique (121).

10. Module hybride comprenant un système d'embrayage multiple (1) selon l'une quelconque des revendications 1 à 9 ainsi qu'une machine électrique pour générer un couple d'entraînement avec un rotor, le rotor étant disposé parallèlement à l'axe par rapport à l'axe de rotation (2) du système d'embrayage multiple (1) et étant relié au système d'embrayage multiple (1) au moyen d'une transmission qui comprend l'élément de transmission (60) du système d'embrayage multiple (1).
